# EUROPEAN PATENT SPECIFICATION

(11) **EP 1 859 711 B1**
(45) Date of publication and mention of the grant of the patent: **26.08.2009**
(21) Application number: 07252137.0
(22) Date of filing: 24.05.2007
(51) Int. Cl.: A47J 27/21, A47J 36/16, A47J 27/60

(54) **Improvements in liquid heating vessels**
Verbesserte Heizgefäße für Flüssigkeiten
Améliorations de récipients de réchauffement de liquides

(30) Priority: 25.05.2006 GB 0610427
(43) Date of publication of application: 28.11.2007
(73) Proprietor: STRIX LIMITED, Ronaldsway, Isle of Man IM9 2RG (GB)
(72) Inventor: Scott, Michael James, Isle of Man, IM3 2AU (GB); Felmeri, Ian, Isle of Man, IM9 1BD (GB)
(74) Representative: Samuels, Adrian James

(56) References cited:
- WO-A-20/08071983
- GB-A- 2 386 532
- NL-C2- 1 015 204

## Description

This invention relates to the reduction of noise in liquid heating vessels, particularly water boiling vessels.

The problem of noise arising during heating in water boiling vessels such as jugs and kettles has been acknowledged for some time. One proposal for overcoming this problem is described in the applicant's UK patent no. 2386532. In this proposal a noise reduction coating is provided on the water facing side of the heater plate of an underfloor heater system. The coating works by controlling the growth of bubbles at nucleation sites on the element surface through having adjacent regions with different surface tension properties.

Although the coatings described in GB 2386532 and subsequent developments of these coatings have been shown to be successful in reducing noise, the applicant has now appreciated that under some circumstances the amount of noise produced can be too high. Specifically it has been found that as limescale builds up on the surface of the heater plate a critical amount of scale is reached. When this occurs a distinct whistle is produced. It is believed that the scale combines with the noise reduction coating to produce a critical condition whereby bubbles of steam form at or near the surface, expand, encounter a cooler layer of water just above the scale layer, and then collapse. The cycle then repeats in very rapid succession (typically 400 to 900 times per second).

The pressure inside a spherical bubble is inversely proportional to its radius. Thus very small bubbles have very high internal pressures. Bubble formation is initially enabled by surface imperfections such as crevices or particles of precipitated scale, and so the bubbles are not spherical. However the bubbles are approximately spherical as they grow. The growth reaches a critical point where the bubbles start to collapse as they condense on meeting a cooler layer of water and so their pressures rise rapidly (possibly reaching of the order of tens of thousands of atmospheres). As this happens at between 400 - 900 Hz, a loud whistle at those frequencies is generated. It has been found that the whistle is most prevalent at temperatures between 60 and 90°C.

GB-A-2 386 532 discloses the features recited in the preamble of claim 1.

The present invention seeks to alleviate the aforementioned problem. The invention provides a liquid heating vessel comprising a heater forming at least part of the base of the vessel, the heater comprising a heater plate and an electric heating element attached to or formed on the underside of the heater plate, said heater plate comprising a noise-reduction coating, characterised in that the vessel further comprising a disrupter member having a surface disposed above and extending over at least part of the upper surface of the heater plate opposite where the heating element is provided, said disrupter member being arranged in use to partially isolate a layer of liquid directly above the heating element.

The disrupter member could be attached to or integral with a wall of the vessel. However this might be difficult to produce and has the disadvantage that it places the burden of properly locating it on the appliance manufacturers. In preferred embodiments therefore the disrupter member is attached to the heater. This is extremely convenient in that it does not require any special features to be formed on the vessel wall and so allows the heater assembly to be fitted into virtually any vessel in place of a conventional heater and does not limit design freedom.

In accordance with the invention therefore a partially isolated layer is created immediately above the element, where bubbles tend to form. During heating the temperature of this layer increases rapidly from ambient to the nucleate boiling phase, thus disrupting the passage through the critical phase in range 60 to 80°C referred to above. It has been found in practice, that, as a result of the imperfections in construction of heaters and the disrupter member, localized boiling occurs in a random manner in the isolated layer and chaotic disruption to water velocity at the surface is caused. The combined effect is that the whistle effect is drastically reduced; indeed it is eliminated completely in preferred embodiments.

In accordance with the invention in its broadest aspects the disrupter member may extend over just part of the heater surface above the element, but preferably the whole of the element is directly beneath the member. Thus where the element comprises a convention horse-shoe shaped sheathed element the surface of the disrupter member would be arcuate. In preferred embodiments for example, the disrupter member surface is annular.

It should be appreciated however that the invention is not limited to horse-shoe shaped sheathed elements. It could apply equally to other sheathed elements or to thick-film heating elements in which a conductive track is applied to the underside of the heater plate.

The disrupter member surface could be continuous or discontinuous. The discontinuity may be manifested as a series of separate, discrete surface regions over the element or, more preferably, an array of apertures in the surface. An apertured surface is preferred as it has been found to reduce the tendency to for the vessel to 'knock' as bubbles coalesce and escape from beneath the disrupter member in a 'glugging' action. Such apertures could take any convenient size and shape - e.g. circular holes, radial slots, arcuate slots, diagonal slots etc. The apertures need not be the same size or shape and could be distributed evenly or unevenly; regularly or randomly.

The disrupter member could be made of any suitable material, e.g. plastics. This would have the advantage of low cost. In some preferred embodiments however it is made from stainless steel as this had been found to give the best noise reduction.

The heater surface comprises a noise-reduction coating. Since the whistling phenomenon referred to in the introduction hereinabove is one which arises when a noise-reduction coating has been applied to the heater surface, the invention is applicable to such heaters.

Preferably the noise-reduction coating is hydrophobic. In some embodiments the coating could comprise adjacent regions with different surface tension properties. In other embodiments the coating comprises a silicon-based material - e.g. Akzo-Nobel X10106. The coating could be continuous or discontinuous at the macro level, e.g. being striped; or at the micro level, e.g. by being cracked.

Certain preferred embodiments of the invention will now be described, by way of example only, with reference to the accompanying drawings in which:
Figs. 1a and 1b are perspective views from above and below respectively of a heater plate for use with the present invention;
Fig. 2 is a perspective view of a disrupter member in accordance with an embodiment of the invention;
Fig. 3 is a cross-sectional view of an assembly of the disrupter member of Fig. 2 and heater of Fig. 1;
Fig. 4 is an enlarged cross-sectional view of the heater plate and disrupter member assembly fitted into a kettle; and
Figs. 5 to 7 show further embodiments of the disrupter member.

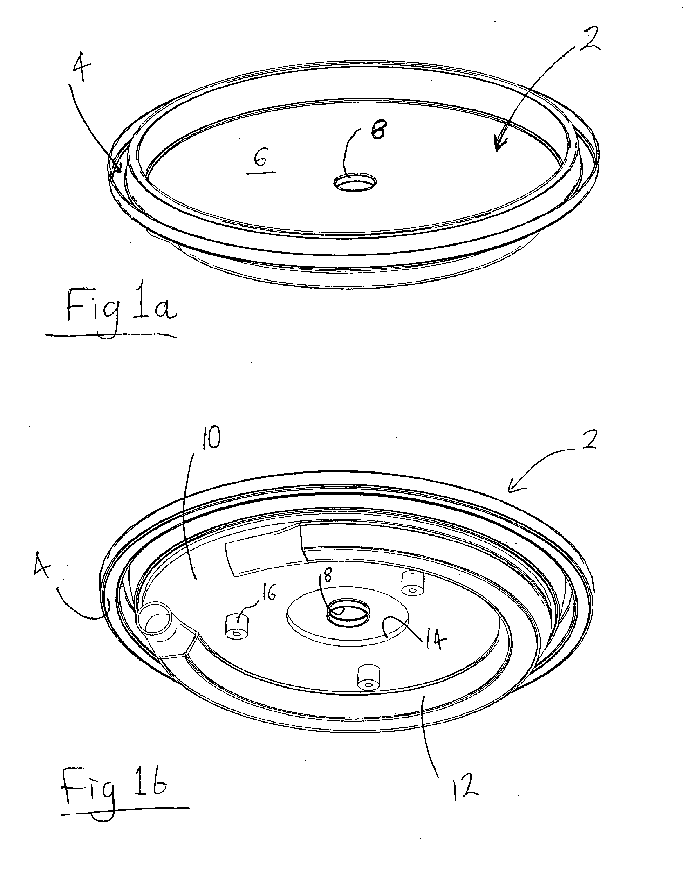

Figs. 1a and 1b show an underfloor heater with which the invention may be used. The heater comprises a thin (e.g. 0.5 to 1 mm) stainless steel heater plate 2 which is formed with a dished central portion and an upwardly open peripheral channel 4 in accordance with the applicant's Sure Seal sealing system which is described in greater detail in WO 96/18331. The heater plate 2 is completely conventional except in two respects. The first of these is that the central portion 6 of the plate is provided with a noise reduction coating in the form of a layer of Akzo-Nobel X10106 silicone-based coating which has been fired so as to produce a surface micro-cracking effect. The second non-conventional feature is a hole 8 in the centre of the plate, the purpose of which will become clear below.

On the underside of the heater plate 2 as may be seen in Fig. 1B, there is provided an aluminium heat diffuser plate 10 which is brazed onto the underside of the central portion 6. In turn a horseshoe-shaped sheathed heating element 12 is brazed onto the underside of the diffuser plate 10 as is conventional in the art. The diffuser plate 10 has a large hole 14 at its centre in which the hole 8 through the plate 2 is located. Three threaded bosses 16 for mounting a control unit (not shown) are also fixed to the diffuser plate 10.

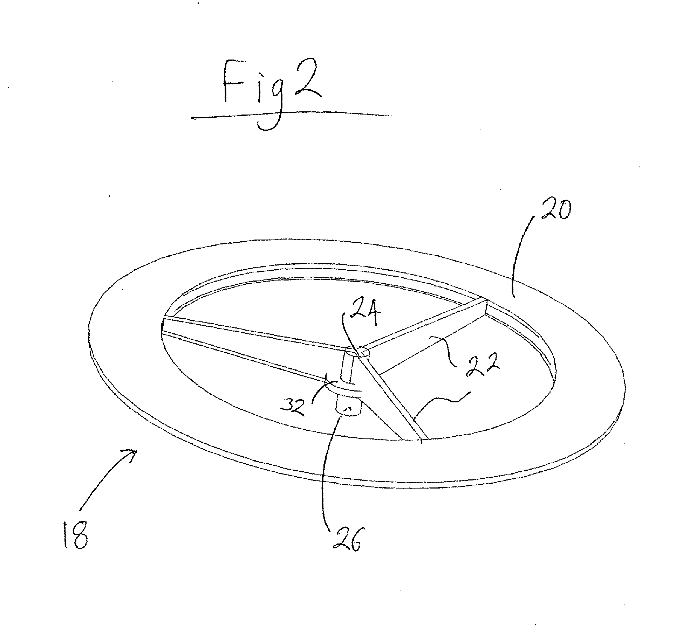

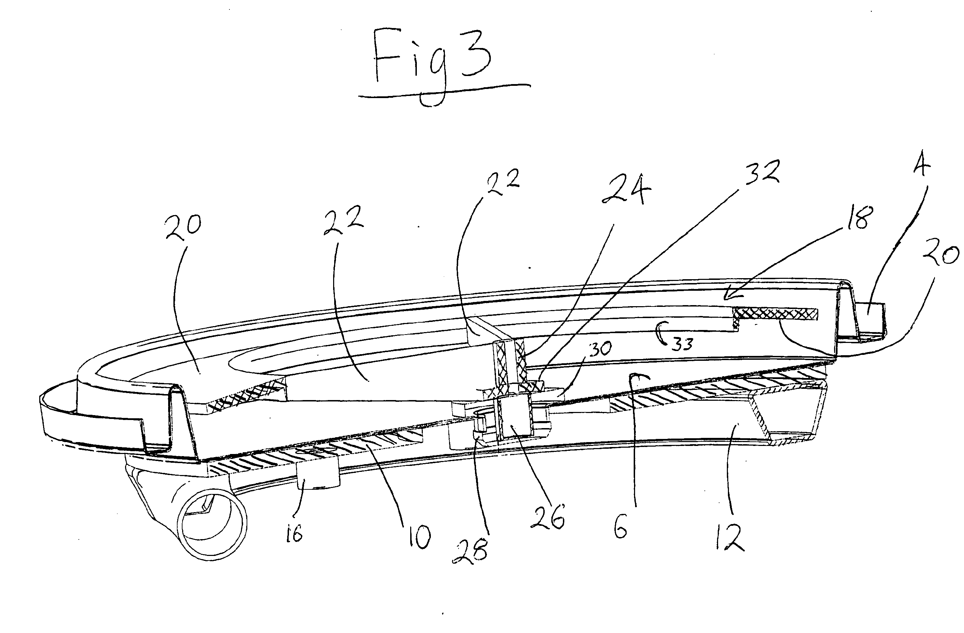

Figure 2 shows a disrupter member 18 according to an embodiment of the invention. The disrupter member 18 is moulded from a heat-resistant plastics material such as acetyl or talc filled polypropylene. In another alternative it could be of stainless steel. It is formed with a main annular surface 20 which is supported by three spokes 22 meeting at a central hub 24. A spigot 26 extends down from the hub 24 in order to mount the disrupter member 18 to the heater plate 2 as is shown in Fig. 3.

Figure 3 is a sectional view through the assembled heater and disrupter member. It may be seen from here that the downwardly projecting spigot 26 of the disrupter member is received in a silicone rubber plug 28 which is a tight sealing fit in the hole 8 in the centre of the heating plate 2. As will be seen, the silicone plug 28 has an upper annular rim 30 which abuts against an annular flange 32 around the top of the disrupter member's spigot 26. This arrangement serves to support the disrupter member 18 above the surface 6 of the heater plate. For example, it can be seen that the annular surface 20 of the disrupter member is spaced vertically from the heater plate surface 6 by of the order of 4-8 mm. It may also be observed from this Figure that the main annular surface 20 of the disrupter member is located vertically above the part of the heater surface 6 opposite where the heating element 12 is attached. The disrupter member annular surface 20 therefore extends over the part of the water contacting surface 6 of the heater which is most directly heated.

As well as mounting the disrupter member 18 and spacing it vertically from the heater surface, the silicone plug 28 also provides thermal isolation from the heater surface to prevent the disrupter member 18 from being damaged by overheating. This is further assisted by the large circular hole 8 in the centre of the aluminium diffuser plate 10 (see Fig. 1b) which means that the only direct path from the heating element 12 to the plug 28 is via the thin stainless steel at the centre of the heater plate which is a poor thermal conductor. There is an additional benefit in that it gives a reduction in the material cost of the diffuser plate.

The annular surface 20 of the disrupter member is angled slightly downwardly towards its periphery although this is not essential. Similarly, the disrupter member is shown with a thin lip 33 extending downwardly from the radially inner edge of the annular surface 20, but this could be omitted.

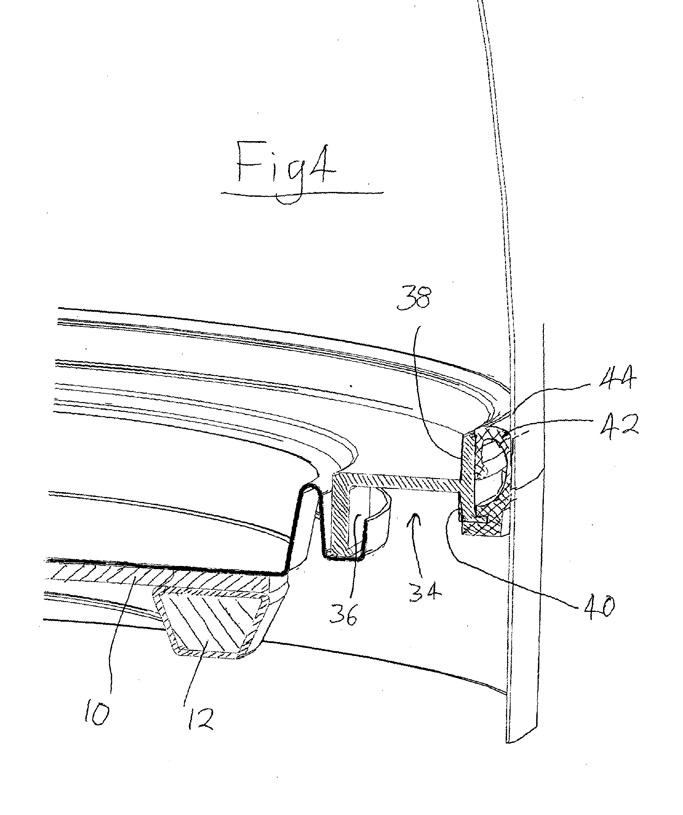

Since the heater plate 2 is a Sure Seal plate (i.e. it has an upwardly open peripheral channel) this may in use be fitted to a plastics vessel simply by clamping a downwardly depending portion of the vessel wall in the channel 4 exactly as is described in WO 96/18331. However, in the embodiment described here, the heater plate 2 is instead fitted into the vessel by means of an intermediate adapter ring 34 as shown in Figure 4. It should be noted that in Figure 4 the disrupter member has been omitted for clarity. However, what may be seen in Fig. 4 is that the adapter ring 34 has an annular wall 36 extending downwardly from its radially inner edge which is received in the upwardly open channel 4 of the heater plate thereby allowing the heater plate 2 to be fitted to the adaptor ring 34 by the standard Sure Seal technique set out in WO 96/18331. At the radially outer edge of the adapter ring 34, annular wall portions 38,40 extend upwardly and downwardly to interface with an annular seal 42 having a rolled-over cross-sectional profile and which seals the adaptor ring 34 against the inner face of the vessel wall 44. The assembly is held into the vessel against the taper of the vessel wall 44 by a suitable clip such as a circlip or a radially expanding spider clip.

In operation the heating element 12 is energised causing it to heat rapidly. It may, for example, be rated at between 2 and 3 kW. The predominant thermal path from the element 12 is directly up through the heat diffuser plate 10 and the stainless steel heater plate 2 into the water. During heating, the noise reduction coating on the central part 6 of the heater surface will prevent the bubbles generated by inevitable nucleate boiling at the heater surface from growing too large and so it will minimise the background heating noise.

Also during heating there will be some convection of water as the water is heated causing it to reduce in density and so rise to be replaced by cooler water. However, this process is disrupted by the annular surface 20 of the disrupter member which is above the part of the heater surface directly above the element 12. The resulting partially isolated layer of water will heat rapidly to boiling and in particular will pass quickly through the temperature range 60-90°C thereby avoiding the very rapid growth and collapse of bubbles that has been found to be associated with a degree of scale build up on the heater surface. Instead, microscopic imperfections in the construction of the heater plate 2 and the disruptor member 18 cause localised boiling to occur in a random manner in the isolated layer and a chaotic disruption to water velocity. This prevents the whistling from occurring, the bubbles instead coalescing into very large bubbles which periodically escape out from under the disrupter member annular surface 20 and rise to the surface of the water making relatively little sound.

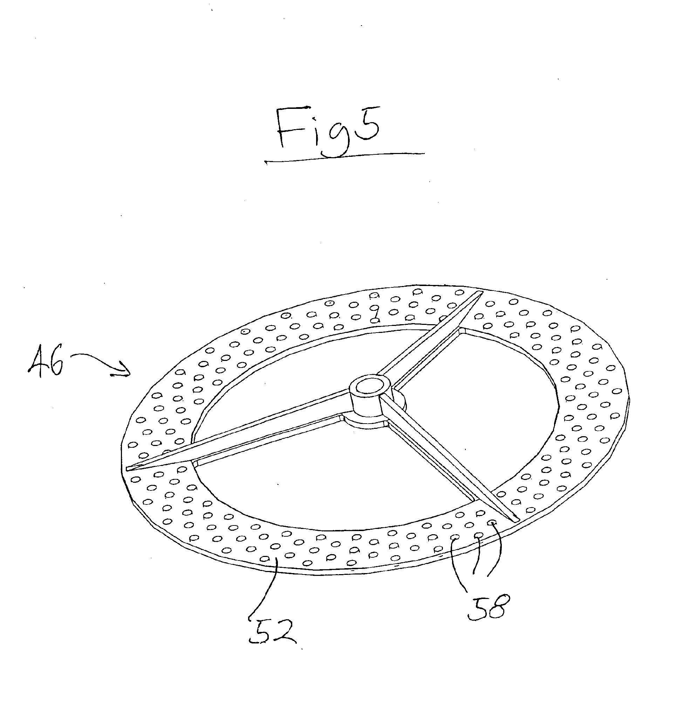

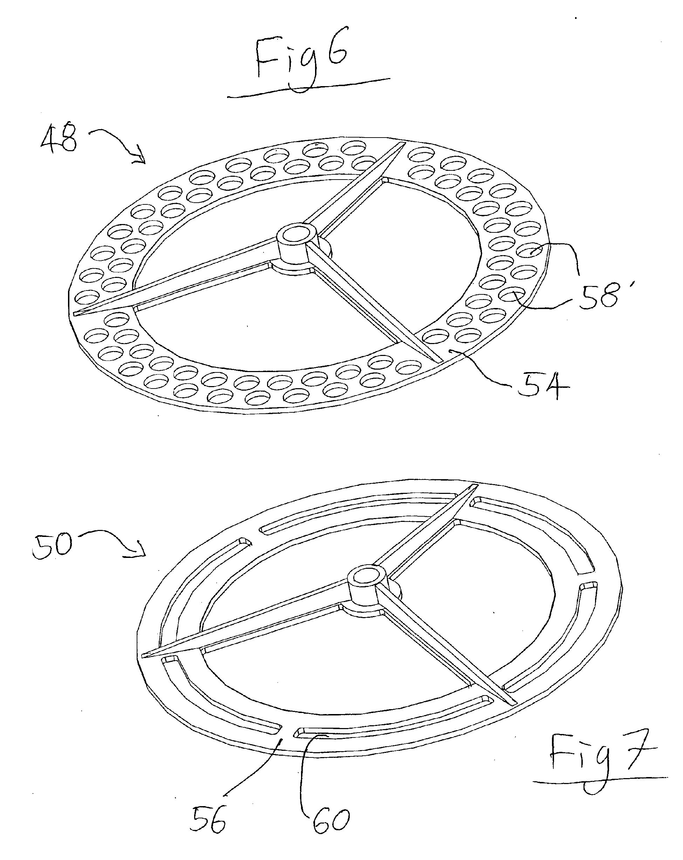

Figs. 5, 6 and 7 show alternative embodiments of the disrupter member. In each case the disrupter member 46,48,50 respectively has the same basic shape as the disrupter member 18 of the first embodiment but is provided with an array of apertures in the annular surface 52,54,56. In the embodiment shown in Figure 5, the apertures comprise small circular holes 58 evenly distributed around the annular surface 52. The embodiment of Figure 6 is very similar except that the holes 58' are larger. The embodiment of Figure 7 has apertures in the form of arcuate slots 60 which are concentric with the annular surface 56. In these three embodiments, the presence of the apertures 58,58',60 enable steam to escape from under the corresponding annular surface 52,54,56 more readily in the first embodiment which can reduce the tendency for "glugging" to occur and the associated rocking of the kettle.

It will be appreciated by those skilled in the art that the invention is not limited to the exemplary embodiments described above and that many variations and modifications could be made. For example, the disrupter member need not be generally annular in shape, it may have any other convenient shape. Similarly, it may not extend around a complete revolution but might have a more limited angular extent. Similarly, the disrupter member need not be attached to the heater but could instead by attached to the wall of the vessel or some other structure such as the adapter ring shown in Figure 4 or similar component.

## Claims

1. A liquid heating vessel comprising a heater forming at least part of the base of the vessel, the heater comprising a heater plate (2) and an electric heating element (12) attached to or formed on the underside of the heater plate, said heater plate comprising a noise-reduction coating, **characterised in that** the vessel further comprises a disrupter member (18; 46; 48; 50) having a surface (20; 52; 54; 56) disposed above and extending over at least part of the upper surface of the heater plate opposite where the heating element is provided, said disrupter member being arranged in use to partially isolate a layer of liquid directly above the heating element.

2. A liquid heating vessel as claimed in claim 1 wherein the disrupter member (18; 46; 48; 50) is attached to the heater.

3. A liquid heating vessel as claimed in claim 1 or 2 wherein the whole of the element (12) is directly beneath the disrupter member (18, 46, 48, 50).

4. A liquid heating vessel as claimed in any preceding claim wherein the disrupter member surface (20; 52; 54; 56) is annular.

5. A liquid heating vessel as claimed in any preceding claim wherein the disrupter member surface (52; 54; 56) comprises an array of apertures (58; 58'; 60) in the surface.

6. A liquid heating vessel as claimed in any preceding claim wherein the disrupter member (18; 46; 48; 50) is made from stainless steel.

7. A liquid heating vessel as claimed in any preceding claim wherein said noise-reduction coating is hydrophobic.

8. A liquid heating vessel as claimed in any preceding claim wherein said coating comprises adjacent regions with different surface tension properties.

## Patentansprüche

1. Flüssigkeitsheizgefäß umfassend einen Heizer, welcher wenigstens ein Teil der Basis des Gefäßes bildet, wobei der Heizer eine Heizplatte (2) und ein elektrisches Heizelement (12) umfasst, welches an der Unterseite der Heizplatte angebracht oder gebildet ist, wobei die Heizplatte eine geräuschdämpfende Beschichtung umfasst, **dadurch gekennzeichnet, dass** das Gefäß ferner ein Unterbrechungselement (18; 46; 48; 50) umfasst, welches eine Oberfläche (20; 52; 54; 56) aufweist, welche sich über wenigstens ein Teil , der oberen Oberfläche der Heizplatte, gegenüberliegend welchem das Heizelement bereitgestellt ist, erstreckt und oberhalb dieser angeordnet ist, wobei das Unterbrechungselement im Betrieb so angeordnet ist um eine Flüssigkeitsschicht direkt oberhalb des Heizelements teilweise abzugrenzen.

2. Flüssigkeitsheizgefäß nach Anspruch 1, wobei das Unterbrechungselement (18; 46; 48; 50) an dem Heizer angebracht ist.

3. Flüssigkeitsheizgefäß nach Anspruch 1 oder 2, wobei die Gesamtheit des Elements (12) sich direkt unterhalb des Unterbrechungselements (18; 46; 48; 50) befindet.

4. Flüssigkeitsheizgefäß nach einem der vorhergehenden Ansprüche, wobei die Oberfläche (20; 52; 54; 56) des Unterbrechungselements ringförmig ist.

5. Flüssigkeitsheizgefäß nach einem der vorhergehenden Ansprüche, wobei die Oberfläche (52; 54; 56) des Unterbrechungselements eine Reihe von Öffnungen (58; 58'; 60) in der Oberfläche umfasst.

6. Flüssigkeitsheizgefäß nach einem der vorhergehenden Ansprüche, wobei das Unterbrechungselement (18; 46; 48; 50) aus Edelstahl angefertigt ist.

7. Flüssigkeitsheizgefäß nach einem der vorhergehenden Ansprüche, wobei die geräuschdämpfende Beschichtung hydrophob ist.

8. Flüssigkeitsheizgefäß nach einem der vorhergehenden Ansprüche, wobei die Beschichtung benachbarte Regionen mit unterschiedlichen Oberflächenspannungseigenschaften umfasst.

## Revendications

1. Récipient de chauffage de liquides comprenant un chauffage formant au moins une partie de la base du récipient, le chauffage comprenant une plaque de chauffage (2) et un élément chauffant électrique (12) attaché ou formé sur le côté inférieur de la plaque de chauffage, ladite plaque de chauffage comprenant un revêtement de réduction de bruit, **caractérisé en ce que** le récipient comprend en outre un élément interrupteur (18 ; 46 ; 48 ; 50) ayant une surface (20 ; 52 ; 54 ; 56) disposée au-dessus et s'étendant sur au moins une partie de la surface supérieure de la plaque de chauffage à l'opposé de l'endroit où l'élément chauffant est prévu, ledit élément interrupteur étant agencé en utilisation pour isoler partiellement une couche de liquide directement au-dessus de l'élément chauffant.

2. Récipient de chauffage de liquides selon la revendication 1, dans lequel l'élément interrupteur (18 ; 46 ; 48 ; 50) est attaché au chauffage.

3. Récipient de chauffage de liquides selon la revendication 1 ou 2, dans lequel l'ensemble de l'élément (12) se trouve directement sous l'élément interrupteur (18; 46 ; 48 ; 50).

4. Récipient de chauffage de liquides selon l'une quelconque des revendications précédentes, dans lequel la surface de l'élément interrupteur (20 ; 52 ; 54 ; 56) est annulaire.

5. Récipient de chauffage de liquides selon l'une quelconque des revendications précédentes, dans lequel la surface de l'élément interrupteur (52 ; 54 ; 56) comprend un réseau d'ouvertures (58 ; 58' ; 60) dans la surface.

6. Récipient de chauffage de liquides selon l'une quelconque des revendications précédentes, dans lequel l'élément interrupteur (18 ; 46 ; 48 ; 50) est fait d'acier inoxydable.

7. Récipient de chauffage de liquides selon l'une quelconque des revendications précédentes, dans lequel ledit revêtement de réduction de bruit est hydrophobe.

8. Récipient de chauffage de liquides selon l'une quelconque de revendications précédentes, dans lequel ledit revêtement comprend des régions adjacentes avec différentes propriétés de tension superficielle.
